# FASCICULE DE BREVET EUROPEEN

(11) **EP 2 109 795 B1**
(45) Date de publication et mention de la délivrance du brevet: **25.01.2012**
(21) Numéro de dépôt: 08702364.4
(22) Date de dépôt: 30.01.2008
(51) Int. Cl.: G02C 5/22

(54) **CHARNIERE ELASTIQUE COMPACTE POUR MONTURE DE LUNETTES**
KOMPAKTES ELASTISCHES SCHWENKGLIED FÜR BRILLENRAHMEN
COMPACT ELASTIC HINGE FOR SPECTACLE FRAMES

(30) Priorité: 08.02.2007 FR 0700882
(43) Date de publication de la demande: 21.10.2009
(73) Titulaire: Mazzucchelli International BV, Amsterdam (NL)
(72) Inventeur: HOTELLIER, Christophe, F-39400 Morez (FR)
(74) Mandataire: Faggioni, Carlo Maria
(86) Numéro de dépôt international: PCT/IB2008/000282
(87) Numéro de publication internationale: WO 2008/096251

(56) Documents cités:
- WO-A-2005/121873
- FR-A1- 2 466 788
- US-A- 4 991 258
- US-A1- 2002 092 960
- US-A1- 2005 086 768
- US-A1- 2006 017 881

## Description

La présente invention concerne le domaine de la lunetterie et les charnières pour monture de lunettes. La présente invention concerne plus particulièrement un perfectionnement d'une charnière pour monture de lunette du type décrit dans la demande WO 2005/121873.

La présente invention concerne ainsi une charnière élastique pour monture de lunettes, comprenant un tenon d'articulation solidaire de la monture, relié par un axe de charnière à un élément de charnière solidaire d'une branche de la monture. Le tenon comporte deux flasques parallèles prenant en sandwich un charnon d'articulation prévu à une extrémité de l'élément de charnière. Les deux flasques et le charnon sont munis chacun d'un orifice d'articulation prévu pour recevoir un élément de fixation tel une vis, formant l'axe de rotation de la charnière.

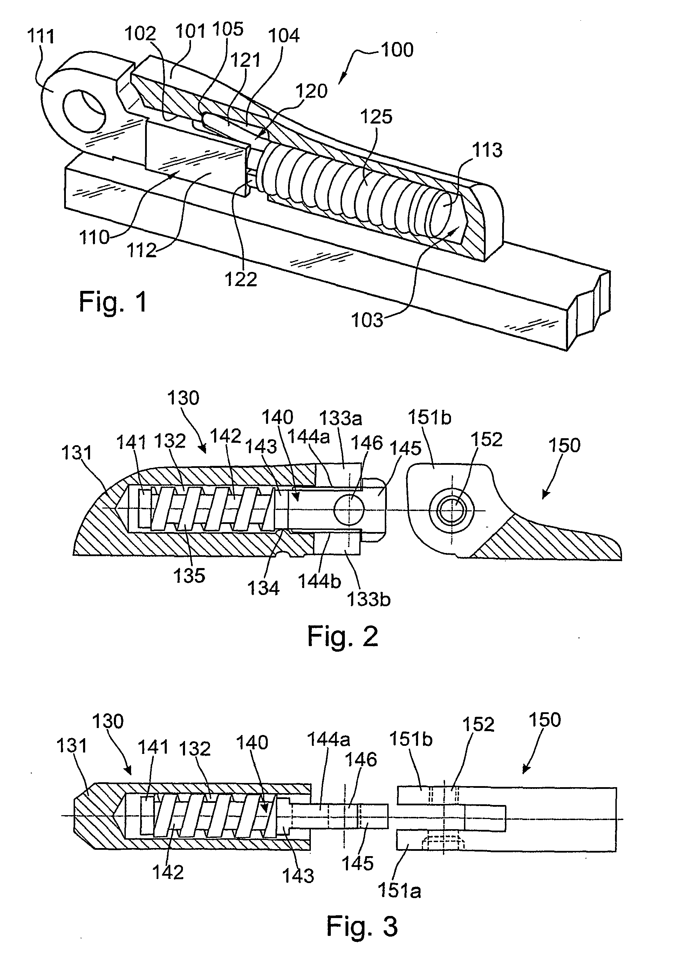

L'élément de charnière est représenté sur la figure 1. Sur la figure 1, l'élément de charnière 100 comprend un boîtier 101 comportant un logement longitudinal 103 avec un orifice avant. Le logement longitudinal 103 comprend une zone de guidage 102 et au moins une cavité 104 comportant une paroi de retenue 105, une coulisse 110 agencée dans le logement selon un axe de translation longitudinal, un ressort de rappel 125 de la coulisse dans une position de repos, et une douille 120. La coulisse 110 comprend une partie saillante 111 s'étendant à l'extérieur du logement 103 et formant le charnon d'articulation, une partie guidée 112 coopérant avec la zone de guidage 102, une partie centrale, et une tige. Une pièce de compression 113 solidaire de la tige, forme une butée arrière du ressort 125. La douille 120 forme une butée avant du ressort, et comporte un corps 122 monté coulissant autour de la tige de la coulisse et au moins une patte élastique 121 orientée vers l'avant du logement 103 selon un angle déterminé, dont l'extrémité s'appuie sur la paroi de retenue 105. Généralement, la douille comporte deux pattes élastiques dont les extrémités s'appuient sur des parois de retenue en regard l'une de l'autre prévues dans le logement.

De ce fait, lorsque la coulisse 110 est tirée vers l'avant, la douille 120 est bloquée en translation et le ressort 125 se trouve comprimé entre la pièce de compression 113 solidaire de la coulisse et le corps 122 de la douille 120 bloqué dans le logement 103.

Un tel élément de charnière présente une longueur de quelques millimètres seulement et est couramment utilisé dans l'industrie de la lunetterie.

La charnière décrite précédemment assure un couplage mécanique entre la monture et une branche de lunettes présentant l'inconvénient de cumuler des jeux en rotation suivant des axes perpendiculaires à l'axe de la charnière, à la fois entre le tenon et le charnon de la coulisse, et entre la coulisse et le boîtier.

La demande de brevet WO 03/071 338 décrit une charnière élastique compacte pour monture de lunettes, représentée sur les figures 2 et 3. Sur les figures 2 et 3, la charnière comprend un tenon d'articulation 150 solidaire d'une monture de lunettes, relié à un élément de charnière 130 solidaire d'une branche de la monture. Le tenon 150 comporte deux flasques 151a, .151b parallèles prenant en sandwich un charnon d'articulation 145 formé à une extrémité de l'élément de charnière 130. Les deux flasques 151a, 151b et le charnon 145 sont munis chacun d'un orifice d'articulation prévu pour recevoir un élément de fixation tel une vis, formant l'axe de rotation de la charnière.

L'élément de charnière 130 comprend un boîtier 131 comportant un logement longitudinal 132 avec un orifice avant. Une coulisse 140 est agencée dans le logement 132 selon un axe de translation longitudinal. La coulisse est ramenée dans une position de repos par un ressort de rappel 135. La coulisse 140 comprend une partie saillante 145 s'étendant à l'extérieur du logement 132 et formant le charnon d'articulation, une partie centrale 143, une tige 142 et une pièce de compression 141 solidaire de la tige, formant une butée arrière du ressort 135. La partie saillante 145 présente une forme en T avec un orifice d'articulation 146. Le boîtier 131 comporte un bourrelet 134 formant la butée avant du ressort 135, en regard de la partie centrale 143 de la coulisse. Ainsi, lorsque la coulisse 140 est tirée vers l'avant en dehors du logement 132, le ressort 135 se trouve comprimé entre la pièce de compression 141 solidaire de la coulisse et le bourrelet 134.

Pour réduire la longueur de la coulisse et donc du boîtier 131, ce dernier comprend une avancée supérieure 133a et une avancée inférieure 133b formées dans le prolongement du bord de l'orifice avant, ces deux avancées formant une zone de guidage latéral de la coulisse, extérieure au logement. La partie saillante 145 de la coulisse comprend une partie guidée avec des surfaces de guidage 144a, 144b coopérant avec les deux avancées 133a, 133b. Lorsque l'élément de charnière 130 et le tenon sont assemblés, la partie saillante 145 de la coulisse 140 et les avancées 133a, 133b se trouvent engagées entre les flasques 151a, 151b du tenon 150. De cette manière, les flasques assurent également un guidage latéral de la coulisse.

Dans la charnière représentée sur les figures 2 et 3, tous les efforts subis par la charnière suivant des axes perpendiculaires à l'axe de rotation de la charnière sont concentrés sur les flasques du tenon. Pour assurer un guidage efficace de la coulisse, les avancées 133a, 133b doivent avoir une longueur et une rigidité suffisantes. A cet effet, les dimensions des avancées doivent être relativement importantes. Il en résulte que les flasques doivent également avoir des dimensions relativement importantes pour dégager un espace suffisant dans le tenon autour de l'axe de rotation de la charnière, permettant une libre rotation du charnon et des avancées. Des flasques de relativement grandes dimensions doivent également être prévues pour assurer un guidage correct de la coulisse. Cette contrainte s'avère pénalisante en ce qui concerne la résistance du tenon face à des efforts de rotation exercés sur la branche autour d'axes perpendiculaires à l'axe de la charnière. Il en résulte que les flasques ont tendance à la longue à s'écarter, ce qui entraîne un jeu important dans la tenue de la branche sur la monture. La coulisse se trouve alors guidée avec un jeu latéral plus important dans des directions suivant l'axe de la charnière. Un tel jeu a pour conséquence d'appliquer à la tige 142 de la coulisse des efforts de flexion pouvant entraîner sa rupture.

La présente invention a pour objet une charnière ne présentant pas les inconvénients précités.

Cet objectif est atteint par la prévision d'un élément de charnière élastique pour monture de lunettes, comprenant un boîtier comprenant un logement longitudinal comportant une zone de guidage, une coulisse agencée dans le logement selon un axe de translation longitudinal, comprenant une partie saillante s'étendant à l'extérieur du logement, et une partie guidée coopérant avec la zone de guidage, et des moyens élastiques de rappel de la coulisse dans une position rétractée vers l'intérieur du logement.

Selon l'invention, le boîtier comprend au moins une avancée n'assurant pas le guidage de la coulisse et s'étendant depuis le boîtier pour s'engager entre deux flasques parallèles d'un tenon de charnière, de manière à assurer un couplage mécanique direct entre le boîtier et le tenon.

Selon un mode de réalisation de l'invention, l'avancée forme une butée agencée pour coopérer avec un élément de liaison des deux flasques, afin de limiter l'angle de rotation de la charnière.

Selon un mode de réalisation de l'invention, le boîtier comprend deux avancées n'assurant pas le guidage de la coulisse et s'étendant depuis le boîtier de part et d'autre de l'axe longitudinal du boîtier, pour s'engager entre deux flasques parallèles d'un tenon de charnière, de manière à assurer un couplage mécanique entre le boîtier et le tenon.

Selon un mode de réalisation de l'invention, les moyens élastiques comprennent un ressort, et la coulisse comprend une partie centrale et une tige dont l'extrémité arrière forme une butée arrière du ressort, l'élément de charnière comprenant une butée avant du ressort.

Selon un mode de réalisation de l'invention, la butée avant comprend une douille comportant un corps monté autour de la partie centrale de la coulisse et au moins une patte élastique orientée vers l'avant du logement et dont l'extrémité s'appuie sur une paroi de retenue agencée dans le logement.

Selon un mode de réalisation de l'invention, la partie guidée de la coulisse comprend un évidement ayant une étendue suffisante pour assurer l'escamotage au moins partiel de la patte élastique lorsque la douille est introduite dans le logement en passant par la zone de guidage.

L'invention concerne également une monture de lunettes, comprenant un élément de charnière tel que défini précédemment.

L'invention concerne également une charnière élastique de monture de lunettes comprenant : un tenon comprenant deux flasques parallèles supportant un axe de charnière, un boîtier comprenant un logement longitudinal comportant une zone de guidage, une coulisse agencée dans le logement selon un axe de translation longitudinal, comprenant une partie saillante s'étendant à l'extérieur du logement et maintenue en sandwich entre les deux flasques par l'axe de charnière, et une partie guidée coopérant avec la zone de guidage, et des moyens élastiques de rappel de la coulisse dans une position rétractée vers l'intérieur du logement.

Selon l'invention, le boîtier comprend au moins une avancée n'assurant pas le guidage de la coulisse et s'étendant depuis le boîtier pour s'engager entre les deux flasques, de manière à assurer un couplage mécanique direct entre le boîtier et le tenon.

Selon un mode de réalisation de l'invention, le tenon comprend un élément de liaison des deux flasques agencé pour coopérer avec l'avancée, afin de limiter l'angle de rotation de la charnière.

Selon un mode de réalisation de l'invention, l'élément de liaison forme une butée de fin de fermeture de la branche de la monture.

Selon un mode de réalisation de l'invention, le boîtier comprend deux avancées n'assurant pas le guidage de la coulisse et s'étendant depuis le boîtier de part et d'autre de l'axe longitudinal du boîtier, pour s'engager entre les deux flasques du tenon, de manière à assurer un couplage mécanique entre le boîtier et le tenon.

Selon un mode de réalisation de l'invention, les moyens élastiques comprennent un ressort, et la coulisse comprend une partie centrale et une tige dont l'extrémité arrière forme une butée arrière du ressort, l'élément de charnière comprenant une butée avant du ressort, solidaire du boîtier.

Selon un mode de réalisation de l'invention, la butée avant comprend une douille comportant un corps monté autour de la partie centrale de la coulisse et au moins une patte élastique orientée vers l'avant du logement et dont l'extrémité s'appuie sur une paroi de retenue agencée dans le logement.

Selon un mode de réalisation de l'invention, la partie guidée de la coulisse comprend un évidement ayant une étendue suffisante pour assurer l'escamotage total de la patte élastique lorsque la douille est introduite dans le logement en passant par la zone de guidage.

Selon un mode de réalisation de l'invention, la partie saillante de la coulisse comprend un ergot qui coopère avec le boîtier pour maintenir la partie saillante en dehors du logement, à l'encontre de la force de rappel exercée par le ressort, l'ergot étant agencé de manière à ne pas venir en contact avec le boîtier lorsque la coulisse est fixée au tenon par l'axe de la charnière.

L'invention concerne également une monture de lunettes, comprenant une charnière telle que définie précédemment.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 décrite précédemment est une vue en perspective et en coupe partielle d'un élément de charnière selon l'art antérieur,
- les figures 2 et 3 décrites précédemment sont des vues en coupes longitudinales d'un autre élément de charnière selon l'art antérieur,
- la figure 4 est une vue en perspective d'une charnière désassemblée d'un mode de réalisation de l'invention,
- la figure 5 est une vue en perspective de la charnière assemblée représentée sur la figure 4,
- les figures 6 et 7 sont des vues en coupe longitudinale de la charnière représentée sur la figure 5, respectivement en position fermée et en position ouverte,
- la figure 8 est une vue en perspective du tenon de la charnière représentée sur la figure 5,
- la figure 9 est une vue en perspective du boîtier de la charnière représentée sur la figure 5,
- la figure 10 est une vue en coupe longitudinale du boîtier de la charnière représentée sur la figure 4,
- la figure 11 est une vue en perspective de la coulisse de la charnière représentée sur la figure 4.

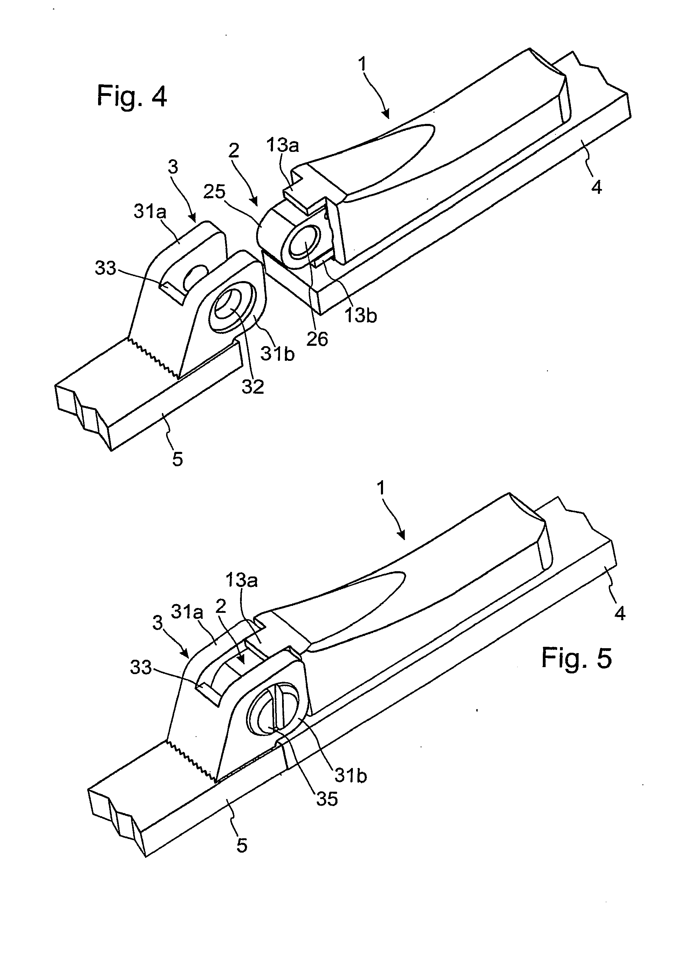

Les figures 4 à 7 représentent une charnière élastique pour monture de lunettes, selon l'invention. Sur ces figures, la charnière comprend un tenon d'articulation 3 solidaire d'une monture 5, relié par un axe de charnière à un élément de charnière solidaire d'une branche 4 de la monture.

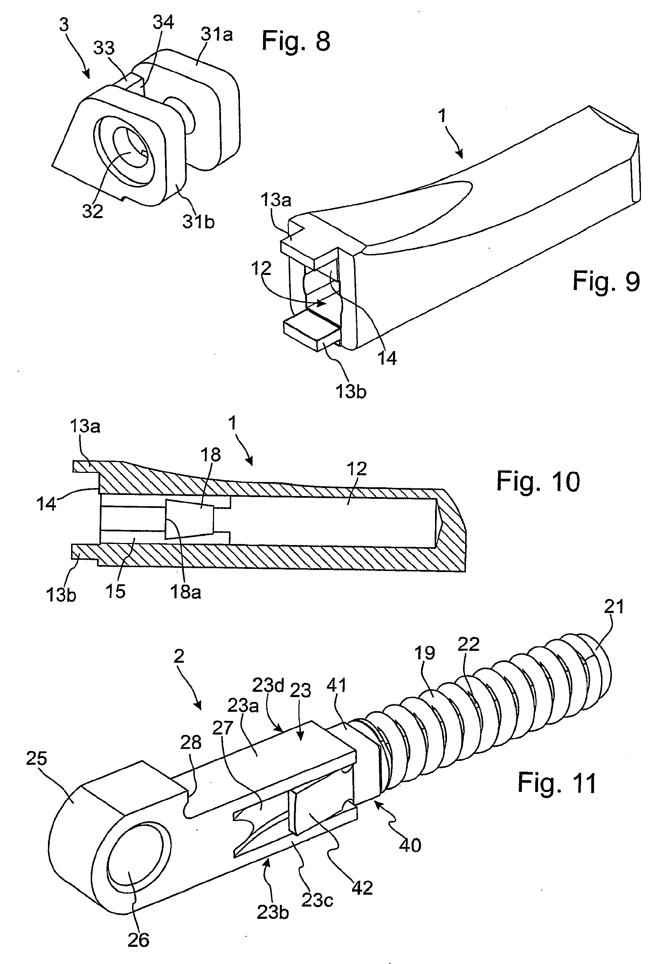

Le tenon est représenté plus en détail en figure 8. Le tenon 3 comporte deux flasques 31a, 31b parallèles prenant en sandwich un charnon d'articulation 25 prévu à une extrémité de l'élément de charnière. Les deux flasques 31a, 31b et le charnon 25 sont munis chacun d'un orifice d'articulation 32, 26 prévu pour recevoir un élément de fixation 35 tel une vis, formant l'axe de rotation de la charnière. Les flasques 31a, 31b sont liées entre elles par un élément de liaison 34.

L'élément de charnière comprend un boîtier 1, une coulisse 2 agencée dans le boîtier selon un axe de translation longitudinal, un ressort de rappel 19 de la coulisse dans une position de repos rétractée vers l'intérieur du boîtier, et une douille 40. Le boîtier 1 est représenté en particulier sur les figures 9 et 10. Le boîtier 1 comprend un logement longitudinal 12 logeant la coulisse 2 et une face avant 14 dans laquelle est formé un orifice avant du logement. La forme du logement est conçue pour pouvoir y introduire, en passant par l'orifice avant, l'ensemble formé par la coulisse 2, la douille 40, et le ressort 19. Le logement 12 comprend une zone de guidage 15 et au moins une cavité 18 comportant une paroi de retenue 18a sensiblement perpendiculaire à l'axe de translation de la coulisse et orientée vers l'arrière du logement 12.

La coulisse 2 est représentée en particulier sur la figure 11. La coulisse 2 comprend une partie saillante 25 formant le charnon d'articulation, s'étendant à l'extérieur du logement 12, une partie guidée 23 coopérant avec la zone de guidage 15 du logement 12, une partie centrale 24 et une tige 22. La partie saillante 25 forme un charnon comportant un perçage 26 prévu pour recevoir l'axe de charnière 35 fixant le charnon avec le tenon 3. La partie centrale 24 et la tige 22 présentent une plus faible section que la partie guidée 23. Une pièce de compression 21 solidaire de la tige, forme une butée arrière du ressort 19. La partie centrale 24 et la tige 22 qui sont ici formées par une seule et même tige, présentent une section rectangulaire, ronde ou polygonale, autour de laquelle sont enfilés la douille 40 et le ressort 19.

La pièce de compression 21 peut être un élément distinct de la tige 22, ou être classiquement formée par une boursouflure à l'extrémité de la tige. Dans ce dernier cas, la pièce 21 est une partie de la tige elle-même.

Les parois de la zone guidage 15 ne couvrent pas nécessairement toute la zone de guidage, qui peut être obtenue par perçage d'un orifice cylindrique formant le logement, puis usinage de parois de guidage planes dans l'orifice cylindrique formant des sortes de rails.

La douille 40 forme une butée avant du ressort 19, et comporte à cet effet un corps 41 monté coulissant autour de la tige 22 de la coulisse, et au moins une patte élastique 42 orientée vers l'avant du logement 12 selon un angle déterminé par rapport à l'axe de translation de la coulisse 2. Généralement, la douille comporte deux pattes élastiques agencées le long de deux faces opposées de la zone de guidage de la coulisse. Des évidements 27 sont formés dans la zone de guidage 23 de la coulisse.

Une fois équipée de la douille 40, du ressort 19 et de la pièce de compression 21, la coulisse est introduite dans le logement 12 en passant par l'orifice avant. Lorsque la coulisse traverse la zone de guidage 15, les pattes élastiques 42 s'escamotent dans les évidements 27. En position de repos de la coulisse à l'intérieur du logement, les pattes élastiques se relâchent et leurs extrémités viennent se loger dans les cavités 18 formées dans le logement 12, en regard des parois de retenue 18a. Ainsi, lorsque la coulisse 2 est tirée vers l'extérieur du boîtier, le ressort 19 pousse les pattes élastiques 42 contre les parois de retenue 18a. Celles-ci bloquent ainsi la douille 40 en translation. Le ressort 19 se comprime alors entre la pièce de compression 21 et la douille 40, exerçant une force de rappel de la coulisse vers la position de repos.

Comme cela apparaît en figure 11, la partie guidée 23 de la coulisse présente des faces latérales gauche 23c et droite 23d qui assurent le guidage latéral gauche et droit de la coulisse, ainsi que des faces latérales supérieure 23a et inférieure 23b qui assurent le guidage latéral supérieur et inférieur de la coulisse. Les évidements 27 sont pratiqués ici sur les faces 23c, 23d. Les pattes élastiques 42 et les évidements 27 sont ici d'une largeur inférieure à la largeur des faces 23c, 23d de sorte qu'il subsiste avantageusement, au bord des évidements, des bandes étroites formant des sortes de rails ou patins qui assurent également le guidage latéral gauche et droit de la coulisse. La partie arrière de la partie guidée 23 présente ainsi une section sensiblement en forme de H renversé.

Bien entendu, les évidements 27 peuvent alternativement être réalisés sur les faces latérales supérieure et inférieure de la zone de guidage 23, ou bien sur les quatre faces de la zone de guidage à la fois si la douille comporte quatre pattes élastiques.

Selon l'invention, le boîtier 1 comprend au moins une avancée 13a prévue pour s'engager entre les flasques 31a, 31b du tenon 3. L'avancée 13a s'étend axialement à partir de la face avant 14 du boîtier.

Avantageusement, deux avancées 13a, 13b sont prévues sur la face avant 14 du boîtier, de part et d'autre de l'orifice du logement 12. Les extrémités des avancées 13a, 13b s'engagent entre les flasques 31a, 31b du tenon 3 de manière à assurer un couplage mécanique direct entre le boîtier 1 et le tenon 3. A noter que ce couplage mécanique ne fait pas obstacle à la libre rotation de la charnière. La prévision des avancées 13a, 13b permet de supprimer, ou à défaut, limiter le jeu entre le boîtier et le tenon. En particulier, comme le boîtier est solidaire d'une branche 4 de la monture, les avancées 13a, 13b permettent de supprimer ou réduire les mouvements de rotation indésirables de la branche autour de son axe longitudinal, par rapport à la monture. Ces mouvements de rotation sont dus aux jeux mécaniques (résultant de tolérances de fabrication ou de l'usure) existant d'une part entre le tenon et la coulisse, et d'autre part, entre la coulisse et le boîtier dans la zone de guidage 15.

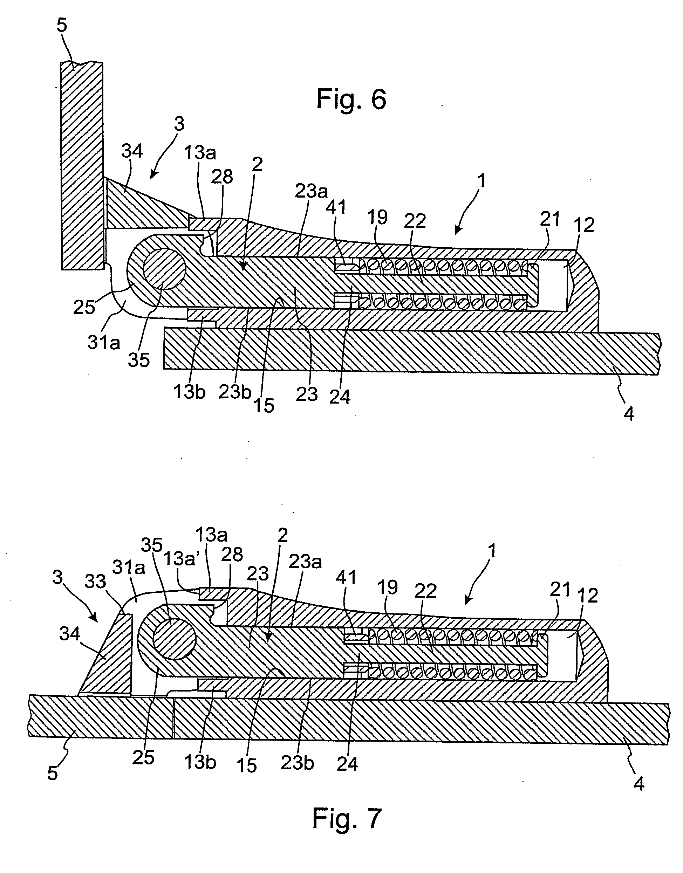

A noter que les avancées 13a, 13b telles que représentées sur les figures 6 et 7 ne sont pas en contact avec la coulisse 2. Les avancées n'assurent donc pas de fonction de guidage de la coulisse. La fonction de guidage de la coulisse se trouve ainsi totalement dissociée de la fonction anti-basculement de la branche 4 autour de son axe, réalisée par les avancées. Il en résulte que la coulisse se trouve correctement guidée quel que soit le jeu latéral de la charnière. Il en résulte également que les avancées 13a, 13b peuvent avoir des dimensions notablement plus réduites que celles des avancées 133a, 133b de la charnière de l'art antérieur représentée sur les figures 2 et 3, les avancées 133a, 133b devant également assurer une fonction de guidage de la coulisse. Ainsi,_dans l'exemple des figures 6 et 7, l'axe de la charnière se trouve totalement à droite du plan contenant les faces avant des avancées 13a, 13b. A titre d'exemple les avancées présentent une longueur de l'ordre de 0,9 mm et une épaisseur de l'ordre de 0,35 mm, tandis que l'axe de la charnière présente un diamètre de l'ordre de 1,4 mm.

Il en résulte que les efforts exercés par le charnon et les avancées sur le tenon sont relativement faibles, de sorte qu'il n'est pas nécessaire d'augmenter la résistance du tenon. Ainsi, dans l'exemple précédent, les flasques présentent des dimensions d'environ 3 mm de côté.

L'élément de liaison 34 du tenon 3 présente une face supérieure 33 formant une butée coopérant avec la face avant 13a' de l'avancée 13a du boîtier 1, de manière à limiter l'angle de rotation de la charnière. La face supérieure 33 de l'élément de liaison est agencée pour que l'avancée supérieure 13a soit en butée contre l'élément de liaison 34 lorsque la monture de lunettes est en position fermée, comme représenté sur la figure 6.

Sur les figures 6, 7 et 11, la partie saillante 25 de la coulisse 2 comprend un ergot 28 agencé en regard de la face 14 avant du boîtier 1. L'ergot 28 est prévu pour bloquer axialement la coulisse lors de son introduction dans le boîtier. Comme illustré sur les figures 6 et 7, lorsque la coulisse 2 est assemblée au tenon 3, le ressort 19 se trouve légèrement comprimé et l'ergot 28 est écarté de la face avant 14 du boîtier 1, quelle que soit la position angulaire de l'élément de charnière par rapport au tenon.

Il apparaîtra clairement à l'homme de l'art que la présente invention est susceptible de diverses variantes de réalisation. En particulier, bien que deux avancées soient préférables, l'invention couvre également un élément de charnière ne comportant qu'une avancée inférieure 13b ou supérieure 13a. Le couplage mécanique entre l'élément de charnière et le tenon est assuré par l'axe de la charnière et l'avancée.

L'élément de liaison 34 entre les deux flasques 31a, 31b du tenon 3 peut être agencé de manière à ne pas former de butée coopérant avec l'avancée supérieure 13a lorsque la branche de la monture se trouve en position fermée. Ainsi, l'élément de liaison 34 peut présenter une hauteur réduite par rapport à l'élément de liaison représenté en particulier sur les figures 6 et 7 pour ne pas venir en contact avec l'avancée 13a lorsque la branche 4 se trouve à la fin de sa course de fermeture.

Par ailleurs, la douille 40 telle que décrite précédemment peut être remplacée par tout autre moyen de butée avant. Ainsi, il peut être envisagé de former, par exemple par poinçonnage, un ou plusieurs bossages à l'intérieur du boîtier à l'emplacement du corps de la douille, comme illustré sur la figure 2.

En outre, d'autres moyens de rappel élastiques peuvent être prévus à la place du ressort 19 pour ramener la coulisse dans sa position de repos, rétractée vers l'intérieur du boîtier.

La charnière selon l'invention est susceptible de divers agencements. Bien que généralement fixé sur des branches de montures de lunettes, l'élément de charnière peut également être monté sur le cadre de la monture, ou sur une partie fixe de branche solidaire du cadre de monture.

## Revendications

1. Elément de charnière élastique pour monture de lunettes, comprenant :
- un boîtier (1) comprenant un logement longitudinal (12) comportant une zone de guidage (15),
- une coulisse (2) agencée dans le logement (12) selon un axe de translation longitudinal, comprenant une partie saillante (25) s'étendant à l'extérieur du logement, et une partie guidée (23) coopérant avec la zone de guidage (15), et
- des moyens élastiques (19) de rappel de la coulisse dans une position rétractée vers l'intérieur du logement, **caractérisé en ce que** le boîtier (1) comprend au moins une avancée (13a, 13b) n'assurant pas le guidage de la coulisse et s'étendant depuis le boîtier pour s'engager entre deux flasques (31a, 31b) parallèles d'un tenon (3) de charnière, de manière à assurer un couplage mécanique direct entre le boîtier et le tenon.

2. Elément de charnière selon la revendication 1, dans lequel l'avancée (13a) forme une butée agencée pour coopérer avec un élément de liaison (34) des deux flasques (31a, 31b), afin de limiter l'angle de rotation de la charnière.

3. Elément de charnière selon la revendication 1 ou 2, dans lequel le boîtier (1) comprend deux avancées (13a, 13b) n'assurant pas le guidage de la coulisse et s'étendant depuis le boîtier de part et d'autre de l'axe longitudinal du boîtier, pour s'engager entre deux flasques (31a, 31b) parallèles d'un tenon (3) de charnière, de manière à assurer un couplage mécanique entre le boîtier et le tenon.

4. Elément de charnière selon l'une des revendications 1 à 3, dans lequel les moyens élastiques comprennent un ressort (19), et la coulisse (2) comprend une partie centrale (24) et une tige (22) dont l'extrémité arrière forme une butée arrière du ressort (19), l'élément de charnière comprenant une butée avant (40) du ressort.

5. Elément de charnière selon la revendication 4, dans lequel la butée avant comprend une douille (40) comportant un corps (41) monté autour de la partie centrale (24) de la coulisse et au moins une patte élastique (42) orientée vers l'avant du logement et dont l'extrémité s'appuie sur une paroi de retenue (18a) agencée dans le logement (12).

6. Elément de charnière selon la revendication 5, dans lequel la partie guidée (23) de la coulisse (2) comprend un évidement (27) ayant une étendue suffisante pour assurer l'escamotage au moins partiel de la patte élastique (42) lorsque la douille (40) est introduite dans le logement (12) en passant par la zone de guidage (15).

7. Monture de lunettes, comprenant un élément de charnière selon l'une des revendications 1 à 6.

8. Charnière élastique de monture de lunettes comprenant :
- un tenon (3) comprenant deux flasques (31a, 31b) parallèles supportant un axe de charnière (35),
- un boîtier (1) comprenant un logement longitudinal (12) comportant une zone de guidage (15),
- une coulisse (2) agencée dans le logement (12) selon un axe de translation longitudinal, comprenant une partie saillante (25) s'étendant à l'extérieur du logement et maintenue en sandwich entre les deux flasques par l'axe de charnière, et une partie guidée (23) coopérant avec la zone de guidage (15), et
- des moyens élastiques (19) de rappel de la coulisse dans une position rétractée vers l'intérieur du logement, **caractérisé en ce que** le boîtier (1) comprend au moins une avancée (13a, 13b) n'assurant pas le guidage de la coulisse (2) et s'étendant depuis le boîtier pour s'engager entre les deux flasques (31a, 31b), de manière à assurer un couplage mécanique direct entre le boîtier et le tenon (3).

9. Charnière selon la revendication 8, dans laquelle le tenon (3) comprend un élément de liaison (34) des deux flasques (31a, 31b) agencé pour coopérer avec l'avancée (13a), afin de limiter l'angle de rotation de la charnière.

10. Charnière selon la revendication 9, dans laquelle l'élément de liaison (34) forme une butée de fin de fermeture de la branche de la monture.

11. Charnière selon l'une des revendications 8 à 10, dans laquelle le boîtier (1) comprend deux avancées (13a, 13b) n'assurant pas le guidage de la coulisse (2) et s'étendant depuis le boîtier de part et d'autre de l'axe longitudinal du boîtier, pour s'engager entre les deux flasques (31a, 31b) du tenon (3), de manière à assurer un couplage mécanique entre le boîtier et le tenon.

12. Charnière selon l'une des revendications 8 à 11, dans laquelle les moyens élastiques comprennent un ressort (19), et la coulisse (2) comprend une partie centrale (24) et une tige (22) dont l'extrémité arrière forme une butée arrière du ressort (19), l'élément de charnière comprenant une butée avant (40) du ressort, solidaire du boîtier.

13. Charnière selon la revendication 12, dans laquelle la butée avant comprend une douille (40) comportant un corps (41) monté autour de la partie centrale (24) de la coulisse et au moins une patte élastique (42) orientée vers l'avant du logement et dont l'extrémité s'appuie sur une paroi de retenue (18a) agencée dans le logement (12).

14. Charnière selon la revendication 13, dans laquelle la partie guidée (23) de la coulisse (2) comprend un évidement (27) ayant une étendue suffisante pour assurer l'escamotage total de la patte élastique (42) lorsque la douille (40) est introduite dans le logement (12) en passant par la zone de guidage (14).

15. Charnière selon l'une des revendications 8 à 14, dans laquelle la partie saillante (25) de la coulisse (2) comprend un ergot (28) qui coopère avec le boîtier (1) pour maintenir la partie saillante en dehors du logement (12), à l'encontre de la force de rappel exercée par le ressort (19), l'ergot étant agencé de manière à ne pas venir en contact avec le boîtier lorsque la coulisse est fixée au tenon (2) par l'axe de la charnière (35).

16. Monture de lunettes, comprenant une charnière selon l'une des revendications 8 à 15.

## Claims

1. Elastic hinge element for a spectacle frame comprising:
• a body (1) comprising a longitudinal slot (12) having a guide zone (15),
• a slide (2) arranged in the slot (12) along a longitudinal translational axis, comprising a projecting part (25) that extends outside the slot and a guided part (23) that cooperates with the guide zone (15), and
• elastic means (19) for restoring the slide into a position retracted towards the inside of the slot,
**characterised in that** the body (1) comprises at least one overhang (13a, 13b) that does not ensure guidance of the slide and extends from the body to engage between two parallel flanges (31a, 31b) of a hinge tenon (3) to ensure a direct mechanical coupling between the body and the tenon.

2. Hinge element according to claim 1, in which the overhang (13a) forms an abutment arranged to cooperate with an element (34) for linking the two flanges (31a, 31b) in order to restrict the angle of rotation of the hinge.

3. Hinge element according to claim 1 or 2, in which the body (1) comprises two overhangs (13a, 13b) that do not ensure guidance of the slide and extend from the body on both sides of the longitudinal axis of the body to engage between two parallel flanges (31a, 31 b) of a hinge tenon (3) to ensure a mechanical coupling between the body and the tenon.

4. Hinge element according to one of claims 1 to 3, in which the elastic means comprise a spring (19) and the slide (2) comprises a central part (24) and a bar (22), the rear end of which forms a rear abutment of the spring (19), wherein the hinge element comprises a front abutment (40) of the spring.

5. Hinge element according to claim 4, in which the front abutment comprises a bushing (40) having a body (41) mounted around the central part (24) of the slide and at least one elastic tab (42) oriented towards the front of the slot, its end abutting against a retaining wall (18a) fitted into the slot (12).

6. Hinge element according to claim 5, in which the guided part (23) of the slide (2) comprises a recess (27) of sufficient extent to ensure at least partial retraction of the elastic tab (42) when the bushing (40) is inserted into the slot (12) passing through the guide zone (15).

7. Spectacle frame comprising a hinge element according to one of claims 1 to 6.

8. Elastic hinge for a spectacle frame, comprising:
• a tenon (3) comprising two parallel flanges (31 a, 31 b) supporting a hinge pin (35),
• a body (1) comprising a longitudinal slot (12) having a guide zone (15),
• a slide (2) arranged in the slot (12) along a longitudinal translational axis comprising a projecting part (25) extending outside the slot and sandwiched between the two flanges by the hinge pin, and a guided part (23) that cooperates with the guide zone (15), and
• elastic means (19) for restoring the slide into a position retracted towards the inside of the slot,
**characterised in that** the body (1) comprises at least one overhang (13a, 13b) that does not ensure guidance of the slide and extends from the body to engage between the two flanges (31a, 31b) to ensure a direct mechanical coupling between the body and the tenon (3).

9. Hinge according to claim 8, in which the tenon (3) comprises an element (34) for linking the two flanges (31a, 31b) arranged to cooperate with the overhang (13a) in order to restrict the angle of rotation of the hinge.

10. Hinge according to claim 9, in which the linking element (34) forms an end abutment to close the arm of the frame.

11. Hinge according to one of claims 8 to 10, in which the body (1) comprises two overhangs (13a, 13b) that do not ensure guidance of the slide (2) and extend from the body on both sides of the longitudinal axis of the body to engage between the two flanges (31a, 31b) of the tenon (3) to ensure a mechanical coupling between the body and the tenon.

12. Hinge according to one of claims 8 to 11, in which the elastic means comprise a spring (19) and the slide (2) comprises a central part (24) and a bar (22), the rear end of which forms a rear abutment of the spring (19), wherein the hinge element comprises a front abutment (40) of the spring integral to the body.

13. Hinge according to claim 12, in which the front abutment comprises a bushing (40) having a body (41) mounted around the central part (24) of the slide and at least one elastic tab (42) oriented towards the front of the slot, its end abutting against a retaining wall (18a) fitted into the slot (12).

14. Hinge according to claim 13, in which the guided part (23) of the slide (2) comprises a recess (27) of sufficient extent to ensure complete retraction of the elastic tab (42) when the bushing (40) is inserted into the slot (12) passing through the guide zone (14).

15. Hinge according to one of claims 8 to 14, in which the projecting part (25) of the slide (2) comprises a lug (28), which cooperates with the body (1) to hold the projecting part outside the slot (12) against the restoring force exerted by the spring (19), said lug being fitted so that it does not come into contact with the body when the slide is fastened to the tenon (2) by the hinge pin (35).

16. Spectacle frame comprising a hinge according to one of claims 8 to 15.

## Patentansprüche

1. Elastisches Scharnierelement für ein Brillengestell, umfassend:
- ein Gehäuse (1) umfassend eine längliche Aufnahme (12) mit einem Führungsbereich (15),
- einen in der Aufnahme (12) längs einer Translationsachse angeordneten Schieber (2) mit einem hervorstehenden Teil (25), der sich außerhalb der Aufnahme erstreckt, und einem geführten Teil (23), der mit dem Führungsbereich (15) zusammenwirkt, und
- elastische, in zum Inneren der Aufnahme hin zurückgezogener Lage angeordnete Rückholeinrichtungen (19) des Schiebers,
**dadurch gekennzeichnet, dass** das Gehäuse (1) mindestens einen Vorsprung (13a,13b) umfasst, der nicht die Führung des Schiebers sicherstellt und sich vom Gehäuse weg erstreckt, um derart zwischen zwei parallelen Flanschen (31 a, 31 b) eines Scharnierhalters (3) anzugreifen, dass eine direkte mechanische Kopplung zwischen dem Gehäuse und dem Halter sichergestellt ist.

2. Scharnierelement nach Anspruch 1, wobei der Vorsprung (13a) einen Anschlag bildet, der dazu eingerichtet ist, mit einem Verbindungselement (34) der beiden Flansche (31 a, 31 b) zusammenzuwirken, um den Rotationswinkel des Scharniers zu begrenzen.

3. Scharnierelement nach Anspruch 1 oder 2, wobei das Gehäuse (1) zwei Vorsprünge (13a, 13b) umfasst, die nicht die Führung des Schiebers sicherstellen und sich auf beiden Seiten der Längsachse des Gehäuses vom Gehäuse weg erstrecken, um derart zwischen zwei parallelen Flanschen (31a, 31b) eines Scharnierhalters (3) anzugreifen, dass eine direkte mechanische Kopplung zwischen dem Gehäuse und dem Halter sichergestellt ist.

4. Scharnierelement nach einem der Ansprüche 1 bis 3, wobei die elastischen Einrichtungen eine Feder (19) umfassen und der Schieber (2) eine Mittelpartie (24) und eine Stange (22) umfasst, deren hinteres Ende einen hinteren Anschlag der Feder (19) bildet, wobei das Scharnierelement einen vorderen Anschlag (40) der Feder bildet.

5. Scharnierelement nach Anspruch 4, wobei der vordere Anschlag eine Hülse (40) aufweist, die einen Körper (41), der um einen Mittelteil (24) des Schiebers herum angebracht ist, und mindestens eine elastische Lasche (42) umfasst, die zum vorderen Bereich der Aufnahme gerichtet ist und deren Ende sich auf einer Haltewand (18a) abstützt, welche in der Aufnahme (12) angeordnet ist.

6. Scharnierelement nach Anspruch 5, wobei der geführte Teil (23) des Schiebers (2) einen Hohlraum (27) aufweist, dessen Ausdehnung ausreicht, um ein zumindest teilweises Versenken der elastischen Lasche (42) sicherzustellen, wenn die Hülse (60) in die Aufnahme (12) eingeführt ist, wobei sie am Führungsbereich (15) entlangfährt.

7. Brillengestell, umfassend ein Scharnierelement nach einem der Ansprüche 1 bis 6.

8. Elastisches Scharnierelement für ein Brillengestell, umfassend:
- einen Halter (3), der zwei parallele Flansche (31 a, 31 b) umfasst, die eine Scharnierachse (35) stützen,
- ein Gehäuse (1) umfassend eine längliche Aufnahme (12) mit einem Führungsbereich (15),
- einen in der Aufnahme (12) längs einer Translationsachse angeordneten Schieber (2) umfassend einem hervorstehenden Teil (25), der sich außerhalb der Aufnahme erstreckt und durch die Scharnierachse zwischen den beiden Flanschen gehalten ist, und einen mit einem Führungsbereich (15) zusammenwirkenden, geführten Teil (23)
- elastische, in zum Innern der Aufnahme hin zurückgezogener Lage angeordnete Rückholeinrichtungen (19) des Schiebers,
**dadurch gekennzeichnet, dass** das Gehäuse (1) mindestens einen Vorsprung (13a, 13b) umfasst, der nicht die Führung des Schiebers (2) sicherstellt und sich vom Gehäuse weg erstreckt, um derart zwischen den zwei Flanschen (31 a, 31 b) anzugreifen, dass eine direkte mechanische Kopplung zwischen dem Gehäuse und dem Halter (3) sichergestellt ist.

9. Scharnier nach Anspruch 8, wobei der Halter (3) ein Verbindungselement (34) der beiden Flansche (31 a, 31 b) umfasst, das dazu eingerichtet ist, mit dem Vorsprung (13a) zusammenzuwirken, um den Rotationswinkel des Scharniers zu begrenzen.

10. Scharnier nach Anspruch 9, wobei das Verbindungselement (34) einen Endanschlag für das Einklappen des Brillengestellarms bildet.

11. Scharnier nach einem der Ansprüche 8 bis 10, wobei das Gehäuse (1) zwei Vorsprünge (13a,13b) umfasst, die nicht die Führung des Schiebers (2) sicherstellen und sich auf beiden Seiten der Längsachse des Gehäuses vom Gehäuse erstrecken, um derart zwischen zwei parallelen Flanschen (31 a, 31 b) eines Scharnierhalters (3) anzugreifen, dass eine direkte mechanische Kopplung zwischen dem Gehäuse und dem Halter sichergestellt ist.

12. Scharnier nach einem der Ansprüche 8 bis 11, wobei die elastischen Einrichtungen eine Feder (19) umfassen und der Schieber (2) eine Mittelpartie (24) und eine Stange (22) umfasst, deren hinteres Ende einen hinteren Anschlag der Feder (19) bildet, wobei das Scharnierelement einen vorderen Anschlag (40) der Feder bildet.

13. Scharnier nach Anspruch 12, wobei der vordere Anschlag eine Hülse (40) aufweist, die einen Körper (41), der um einen Mittelteil (24) des Schiebers herum angebracht ist, und mindestens eine elastische Lasche (42) umfasst, die zum vorderen Bereich der Aufnahme gerichtet ist und deren Ende sich auf einer Haltewand (18a) abstützt, welche in der Aufnahme (12) angeordnet ist.

14. Scharnier nach Anspruch 13, wobei der geführte Teil (23) des Schiebers (2) einen Hohlraum (27) aufweist, dessen Ausdehnung ausreicht, um ein vollständiges Versenken der elastischen Lasche sicherzustellen, wenn die Hülse (40) in die Aufnahme (12) eingeführt ist, wobei sie am Führungsbereich (15) entlangfährt.

15. Scharnier nach einem der Ansprüche 8 bis 14, wobei der hervorstehende Teil (25) des Schiebers (2) einen Sporn (28) aufweist, der mit dem Gehäuse (1) zusammenwirkt, um den hervorstehenden Teil entgegen der durch die Feder (19) aufgebrachten Rückstellkraft außerhalb der Aufnahme (12) zu halten, wobei der Sporn derart angeordnet ist, dass er nicht mit dem Gehäuse in Kontakt kommt, wenn der Schieber durch die Achse des Scharniers (35) am Halter (2) befestigt ist.

16. Brillengestell, umfassend ein Scharnier nach einem der Ansprüche 8 bis 15.
